# EUROPEAN PATENT APPLICATION

(11) **EP 3 896 605 A1**
(43) Date of publication of application: **20.10.2021**
(21) Application number: 21156023.0
(22) Date of filing: 09.02.2021
(51) Int. Cl.: G06K 9/00, G06N 3/04, G06K 9/62

(54) **METHOD AND APPARATUS FOR SPOOF DETECTION**

(30) Priority: 17.04.2020 CN 202010304904
(71) Applicant: BEIJING BAIDU NETCOM SCIENCE AND TECHNOLOGY CO. LTD., 100085 Beijing (CN)
(72) Inventor: FENG, Haocheng, Beijing, 100085 (CN); YUE, Haixiao, Beijing, 100085 (CN); HONG, Zhibin, Beijing, 100085 (CN); WANG, Keyao, Beijing, 100085 (CN)
(74) Representative: V.O.

(57) **Abstract**

A method and apparatus for spoof detection are provided. An implementation of the method includes: acquiring an original image; inputting the original image into a training-completed spoof cue extraction network, to obtain a spoof cue signal of the original image; calculating an element-wise mean value of the spoof cue signal; and generating a spoof detection result of the original image based on the element-wise mean value.

## Description

### TECHNICAL FIELD

Embodiments of the present disclosure relate to the field of computer technology, and more particularly, to a method and apparatus for spoof detection.

### BACKGROUND

In spoof detection, whether an image is an image of a live body or not is detected, and is a basic component module of a spoof detection system, thereby ensuring safety of the spoof detection system. Currently, spoof detection algorithms by using deep learning techniques are the mainstream methods in the field, and have greatly improved in accuracy compared with conventional algorithms.

At present, there are many implementation schemes of spoof detection algorithms. According to technical routes, they are divided into two main types: traditional spoof manual feature extraction and classification methods and spoof detection methods by using deep learning. The conventional manual feature extraction and classification methods mainly include spoof detection methods which are based on the manual features such as LBP (Local binary pattern), HOG (Histogram of oriented gradients), and SIFT (Scale-invariant feature transform) and conventional classifiers. This type of method first extracts spoof features based on manually designed feature extractors, and then classifies the features based on conventional classifiers such as SVM (Support Vector Machine) to finally obtain spoof detection results. The spoof detection method by using deep learning mainly includes spoof detection methods based on convolution neural networks, LSTM (Long Short-Term Memory), and the like. This type of method use neural networks for spoof feature extraction and classification.

### SUMMARY

Embodiments of the present disclosure provide a method and apparatus for spoof detection.

In a first aspect, some embodiments of the present disclosure provides a method for spoof detection. The method includes: acquiring an original image; inputting the original image into a training-completed spoof cue extraction network, to obtain a spoof cue signal of the original image; calculating an element-wise mean value of the spoof cue signal; and generating a spoof detection result of the original image based on the element-wise mean value.

In some embodiments, the training-completed spoof cue extraction network is obtained by: acquiring training samples, wherein a training sample comprises a sample original image and a sample category tag for labeling that the sample original image belongs to a live body sample or a spoof sample; and training the spoof cue extraction network to be trained and an auxiliary classifier network to be trained simultaneously by using the training samples, to obtain the training-completed spoof cue extraction network.

In some embodiments, the training the spoof cue extraction network to be trained and the auxiliary classifier network to be trained simultaneously by using the training samples, to obtain the training-completed spoof cue extraction network, includes: training the spoof cue extraction network to be trained by using the sample original image, to obtain a sample spoof cue signal of the sample original image and a pixel-wise L1 loss corresponding to the live body sample; training the auxiliary classifier network to be trained with the sample spoof cue signal, to obtain a sample category of the sample original image and a binary classification loss; and updating parameters of the spoof cue extraction network to be trained and the auxiliary classifier network to be trained based on the pixel-wise L1 loss and the binary classification loss until the networks converge, so as to obtain the training-completed spoof cue extraction network.

In some embodiments, the training the spoof cue extraction network to be trained by using the sample original image, to obtain the sample spoof cue signal of the sample original image, includes: inputting the sample original image into the spoof cue extraction network to be trained, to obtain the sample spoof cue signal; the training the auxiliary classifier network to be trained by using the sample spoof cue signal, to obtain the sample category of the sample original image, includes: superimposing the sample spoof cue signal on the sample original image, to obtain a sample superimposition image; inputting the sample superimposition image to the auxiliary classifier network to be trained, to obtain the sample category of the sample original image.

In some embodiments, the spoof cue extraction network comprises an encoder-decoder structure; and the inputting the sample original image into the spoof cue extraction network to be trained, to obtain the sample spoof cue signal, includes: inputting the sample original image into the encoder, to obtain a sample encoded image; inputting the sample encoded image into the decoder, and to obtain a sample decoded image; inputting the sample decoded image into a tangent activation layer, to obtain the sample spoof cue signal.

In some embodiments, the encoder comprises a plurality of encoding residual sub-networks; and the inputting the sample original image to the encoder, to obtain the sample encoded image, includes: down-sampling the sample original image successively by using the serially connected plurality of encoding residual sub-networks, to obtain a plurality of sample down-sampled encoded images output by the plurality of encoding residual sub-networks, wherein the sample down-sampled encoded image output by the last encoding residual sub-network is the sample encoded image.

In some embodiments, the decoder comprises a plurality of decoding residual sub-networks; and the inputting the sample encoded image to the decoder, to obtain the sample decoded image includes : decoding the sample encoded image successively by using the serially connected plurality of decoding residual sub-networks, to obtain the sample decoded image.

In some embodiments, the decoding the sample encoded image successively by using the serially connected plurality of decoding residual sub-networks, includes: for a current decoding residual sub-network in the plurality of decoding residual sub-networks, up-sampling an input of the current decoding residual sub-network by using nearest neighbor interpolation, to obtain a sample up-sampled decoded image; convolving the sample up-sampled decoded image, to obtain a sample convolved decoded image; concatenating the sample convolved decoded image with an output of an encoding residual sub-network symmetrical to the current decoding residual sub-network, to obtain a sample concatenated decoded image; and inputting the sample concatenated decoded image into an encoding residual sub-network in the current decoding residual sub-network, to obtain an output of the current decoding residual sub-network.

In a second aspect, some embodiments of the present disclosure provide an apparatus for spoof detection. The apparatus includes: an acquisition unit, configured to acquire an original image; an extraction unit, configured to input the original image into a training-completed spoof cue extraction network, to obtain a spoof cue signal of the original image; a calculation unit, configured to calculate an element-wise mean value of the spoof cue signal; and a generation unit, configured to generate a spoof detection result of the original image based on the element-wise mean value.

In some embodiments, the training-completed spoof cue extraction network is obtained by: acquiring training samples, wherein a training sample comprises a sample original image and a sample category tag for labeling that the sample original image belongs to a live body sample or a spoof sample; and training the spoof cue extraction network to be trained and an auxiliary classifier network to be trained simultaneously by using the training samples, to obtain the training-completed spoof cue extraction network.

In some embodiments, the training the spoof cue extraction network to be trained and the auxiliary classifier network to be trained simultaneously by using the training samples, to obtain the training-completed spoof cue extraction network, includes: training the spoof cue extraction network to be trained by using the sample original image, to obtain a sample spoof cue signal of the sample original image and a pixel-wise L1 loss corresponding to the live body sample; training the auxiliary classifier network to be trained with the sample spoof cue signal, to obtain a sample category of the sample original image and a binary classification loss; updating parameters of the spoof cue extraction network to be trained and the auxiliary classifier network to be trained based on the pixel-wise L1 loss and the binary classification loss until the networks converge, so as to obtain the training-completed spoof cue extraction network.

In some embodiments, the training the spoof cue extraction network to be trained by using the sample original image, to obtain the sample spoof cue signal of the sample original image, includes: inputting the sample original image into the spoof cue extraction network to be trained, to obtain the sample spoof cue signal; and the training the auxiliary classifier network to be trained by using the sample spoof cue signal, to obtain the sample category of the sample original image, includes: superimposing the sample spoof cue signal on the sample original image, to obtain a sample superimposition image; and inputting the sample superimposition image to the auxiliary classifier network to be trained, to obtain the sample category of the sample original image.

In some embodiments, the spoof cue extraction network comprises an encoder-decoder structure; and the inputting the sample original image into the spoof cue extraction network to be trained, to obtain the sample spoof cue signal, includes: inputting the sample original image into the encoder, to obtain a sample encoded image; inputting the sample encoded image into the decoder, and to obtain a sample decoded image; and inputting the sample decoded image into a tangent activation layer, to obtain the sample spoof cue signal.

In some embodiments, the encoder comprises a plurality of encoding residual sub-networks; and the inputting the sample original image to the encoder, to obtain the sample encoded image, includes: down-sampling the sample original image successively by using the serially connected plurality of encoding residual sub-networks, to obtain a plurality of sample down-sampled encoded images output by the plurality of encoding residual sub-networks, wherein the sample down-sampled encoded image output by the last encoding residual sub-network is the sample encoded image.

In some embodiments, the decoder comprises a plurality of decoding residual sub-networks; and the inputting the sample encoded image to the decoder, to obtain the sample decoded image, includes : decoding the sample encoded image successively by using the serially connected plurality of decoding residual sub-networks, to obtain the sample decoded image.

In some embodiments, the decoding the sample encoded image successively by using the serially connected plurality of decoding residual sub-networks, includes: for a current decoding residual sub-network in the plurality of decoding residual sub-networks, up-sampling an input of the current decoding residual sub-network by using nearest neighbor interpolation, to obtain a sample up-sampled decoded image; convolving the sample up-sampled decoded image, to obtain a sample convolved decoded image; concatenating the sample convolved decoded image with an output of an encoding residual sub-network symmetrical to the current decoding residual sub-network, to obtain a sample concatenated decoded image; and inputting the sample concatenated decoded image into an encoding residual sub-network in the current decoding residual sub-network, to obtain an output of the current decoding residual sub-network.

In a third aspect, some embodiments of the present disclosure provide an electronic device, the electronic device includes: one or more processors; storage means, storing one or more programs thereon, the one or more programs, when executed by the one or more processors, cause the one or more processors to perform the method according to any one of the embodiments in the first aspect.

In a fourth aspect, some embodiments of the present disclosure provide a computer readable medium, storing a computer program, where the computer program, when executed by a processor, causes the processor to perform the method according to any one of the embodiments in the first aspect.

In a fifth aspect, some embodiments of the present disclosure provide a computer program product comprising instructions which, when the program is executed by a computer, cause the computer to carry out the method according to any one of the embodiments in the first aspect.

The method and apparatus for spoof detection provided in embodiments of the present disclosure, first inputs an acquired original image into a training-completed spoof cue extraction network, to obtain a spoof cue signal of the original image; then calculates an element-wise mean value of the spoof cue signal; and finally generates a spoof detection result of the original image based on the element-wise mean value. A new method for spoof detection is provided, by performing the spoof detection using the spoof detection technology based on spoof cue mining and amplifying, the accuracy of spoof detection is significantly improved.

### BRIEF DESCRIPTION OF THE DRAWINGS

Other features, objects, and advantages of the present disclosure will become more apparent by reading the detailed description of non-limiting embodiments made with reference to the following drawings:
FIG. 1 is an exemplary system architecture in which an embodiment of the present disclosure may be applied;
FIG. 2 is a flow chart of a method for spoof detection according to an embodiment of the present disclosure;
FIG. 3 is a flow chart of a method for training a spoof cue extraction network according to an embodiment of the present disclosure;
FIG. 4 is a flow chart of a method for training a spoof cue extraction network according to another embodiment of the present disclosure;
FIG. 5 is a technical architecture diagram of a method for training a spoof cue extraction network;
FIG. 6 is a structural diagram of a decoding residual sub-network;
FIG. 7 is a structural diagram of an spoof cue extraction network and an auxiliary classifier network;
FIG. 8 is a schematic structural diagram of an apparatus for spoof detection according to an embodiment of the present disclosure;
FIG. 9 is a schematic structural diagram of a computer system for implementing an electronic device according to an embodiment of the present disclosure.

### DETAILED DESCRIPTION OF EMBODIMENTS

Embodiments of present disclosure will be described below in detail with reference to the accompanying drawings. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that the some embodiments in the present disclosure and some features in the disclosure may be combined with each other on a non-conflict basis. Features of the present disclosure will be described below in detail with reference to the accompanying drawings and in combination with embodiments.

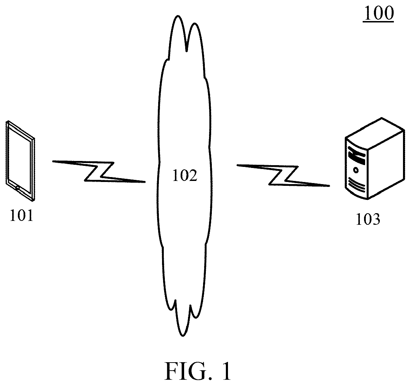

FIG. 1 illustrates an example system architecture 100 in which a method for spoof detection or an apparatus for spoof detection may be applied.

As shown in FIG. 1, the system architecture 100 may include a photographing device 101, a network 102, and a server 103. The network 102 serves to provide the medium of the communication link between the photographing device 101 and the server 103. Network 102 may include various types of connections, such as wired, wireless communication links, or fiber optic cables, among others.

The photographing device 101 may be a hardware or a software. When the photographing device 101 is a hardware, it may be various electronic devices supporting image photographing, including but not limited to a camera, a camera, a smartphone, and the like. When the photographing device 101 is a software, it may be installed in the electronic device mentioned above. It may be implemented as a plurality of software or software modules, or as a single software or software module. It is not specifically limited herein.

The server 103 may provide various services. For example, the server 103 may analyze the data such as an original image acquired from the photographing device 101, and generate a processing result (for example, a spoof detection result).

It should be noted that the server 103 may be a hardware or a software. When the server 103 is a hardware, a distributed server cluster composed of multiple servers may be implemented or a single server may be implemented. When the server 103 is a software, it may be implemented as a plurality of software or software modules (e.g., for providing distributed services) or as a single software or software module. It is not specifically limited herein.

It should be noted that the method for spoof detection provided in embodiments of the present disclosure is generally performed by the server 103, and accordingly, the apparatus for spoof detection is generally provided in the server 103.

It should be understood that the number of photographing devices, networks and servers in FIG. 1 is merely illustrative. There may be any number of photographing devices, networks, and servers as required for implementation.

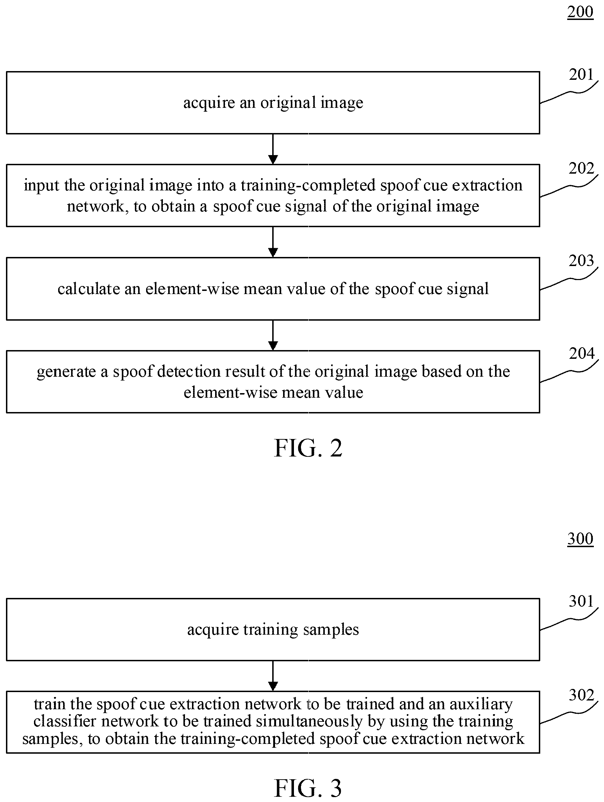

With continuing reference to FIG. 2, a flow 200 of a method for spoof detection according to an embodiment of the present disclosure is shown. The method for spoof detection includes:
Step 201, acquiring an original image.

In an embodiment, an execution body of the method for spoof detection (for example, the server 103 shown in FIG. 1) may receive an original image transmitted from a photographing device (for example, the photographing device 101 shown in FIG. 1) . The original image may be an image obtained by that the photographing device photographs an object (e.g., a human face) need to be detected.

Step 202, inputting the original image into a training-completed spoof cue extraction network, to obtain a spoof cue signal or spoof cue signals of the original image.

In an embodiment, the execution body described above may input the original image into the training-completed spoof cue extraction network, to output a spoof cue signal or spoof cue signals of the original image. The spoof cue extraction network may be used to extract a spoof cue signal of an image input thereto. A spoof cue signal may be a characteristic signal indicating that a target in the image, which is input into the spoof cue extraction network, is not a live body. The spoof cue signal or spoof cue signals of a live body is usually an all-zero graph, and the spoof cue signal or spoof cue signals of the non-live body is usually not an all-zero graph.

Step 203, calculating an element-wise mean value of the spoof cue signal.

In an embodiment, the execution body described above may calculate an element-wise mean value of the spoof cue signal (s) . The element-wise mean value may be a mean value obtained by adding together the spoof cue signals element by element.

Step 204: generating a spoof detection result of the original image based on the element-wise mean value.

In an embodiment, the execution body described above may generate the spoof detection result of the original image based on the element-wise mean value. The spoof detection result may be the information describing whether or not the target in the original image is a live body. Generally, the larger the element-wise mean value, the more likely the target in the original image is not a live body, and it is more likely the original image is a spoof image. Conversely, the smaller the element-wise mean value, the more likely the target in the original image is a live body, and it is more likely the original image is a live body image. Therefore, the execution body mentioned above can compare the element-wise mean value with a preset threshold value. If the element-wise mean value is greater than the preset threshold value, a detection result indicating that the target in the original image is not a live body may be generated. If the element-wise mean value is not greater than the preset threshold value, a detection result indicating that the target in the original image is a live body may be generated.

According to the method for spoof detection provided in embodiments of the present disclosure, an acquired original image is first input to a training-completed spoof cue extraction network, and an spoof cue signal of the original image is output; then an element-wise mean value of the spoof cue signal is calculated; and finally generating a spoof detection result of the original image based on the element-wise mean value. A new spoof detection method is provided, which performs spoof detection by using spoof detection technology based on spoof cue mining and amplifying, and the new spoof detection method can significantly improve the accuracy of spoof detection. Compared with the conventional manual feature extraction and classification methods, the spoof cue signal obtain herein has strong feature stability and is not easily affected by factors such as illumination. Compared with the conventional spoof detection method by using deep learning, the method provided in embodiments of the present disclose does not over-fit over small-range training samples, improving generalization of unknown attack modes and unknown spoof samples. In addition, when the method for spoof detection provided in embodiments of the present disclosure is applied to a face spoof detection scenario, the face spoof detection performance can be improved. By improving the performance of face spoof detection, the method for spoof detection provided herein may be applied to various scenarios in the field of face recognition, such as attendance, access control, security, financial payment. Many applications based on the face spoof detection technology are facilitated to improve the effect and user experience, and further promotion of business projects is facilitated.

Referring further to FIG. 3, there is shown a flow 300 of a method for training an spoof cue extraction network according to an embodiment of the present disclosure. The method for training a spoof cue extraction network comprises the following steps:
Step 301, acquiring training samples.

In an embodiment, the execution body (for example, the server 103 shown in FIG. 1) of the method for training a spoof cue extraction network may acquire a large number of training samples. Each training sample may include a sample original image and a corresponding sample category tag. The sample category tag may be used to label whether the sample original image belongs to a live body sample or a spoof sample. For example, if the sample original image is an image obtained by photographing a live body, the value of the corresponding sample category tag may be 1, and the training sample comprising this sample original image and the corresponding sample category tag is a live body sample. If the sample original image is an image obtained by photographing a non-live body, the value of the corresponding sample category tag may be 0, and a training sample comprising this sample original image and the corresponding sample category tag is a spoof sample.

Step 302, training the spoof cue extraction network to be trained and an auxiliary classifier network to be trained simultaneously by using the training samples, to obtain the training-completed spoof cue extraction network.

In an embodiment, the execution body mentioned above may perform training on the spoof cue extraction network to be trained and the auxiliary classifier network to be trained simultaneously by using training samples, to obtain the training-completed spoof cue extraction network. The spoof cue extraction network may be used to extract an spoof cue signal of an image input thereto. The auxiliary classifier network may be, for example, a network capable of performing binary classifications, such as ResNet (Residual Network) 18, for detecting whether an target in an image is a live body based on the spoof cue signal input thereto.

Generally, during training of the network, the output of the spoof cue extraction network may be used as an input to the auxiliary classifier network. For example, the spoof cue extraction network to be trained may be trained with a sample original image, to obtain sample spoof cue signal of the sample original image and pixel-wise L1 loss corresponding to a live body sample in the sample original images. Then the auxiliary classifier network to be trained may be trained by using the sample spoof cue signal, to obtain a sample category and a binary classification loss of the sample original image; finally, the parameters of the spoof cue extraction network to be trained and the auxiliary classifier network to be trained are updated according to the pixel-wise L1 loss and the binary classification loss until the networks converges, so that the training-completed spoof cue extraction network is obtained. When extracting the spoof cue signal, a sample original image is input to the spoof cue extraction network, to output the sample spoof cue signal. The spoof cue signal of the live body sample is defined as an all-zero graph, and a pixel-wise L1 loss is introduced for supervising live body samples without supervising the output results of spoof samples. After extracting the spoof cue signal, the sample spoof cue signal is superimposed on the sample original image to obtain a sample superimposition image, and then the sample superimposition image is input to the auxiliary classifier network to output a sample category of the sample original image. The sample spoof cue is superimposed on the sample original image and input into the auxiliary classifier network, and the network convergence is supervised by introducing a binary classification loss function.

It should be noted that the auxiliary classifier network only acts on the network training phase. In the network prediction stage, an element-wise mean operation is performed on the output of the spoof cue extraction network, and the element-wise mean value is used as a basis for detecting whether a target in an image is a live body or not.

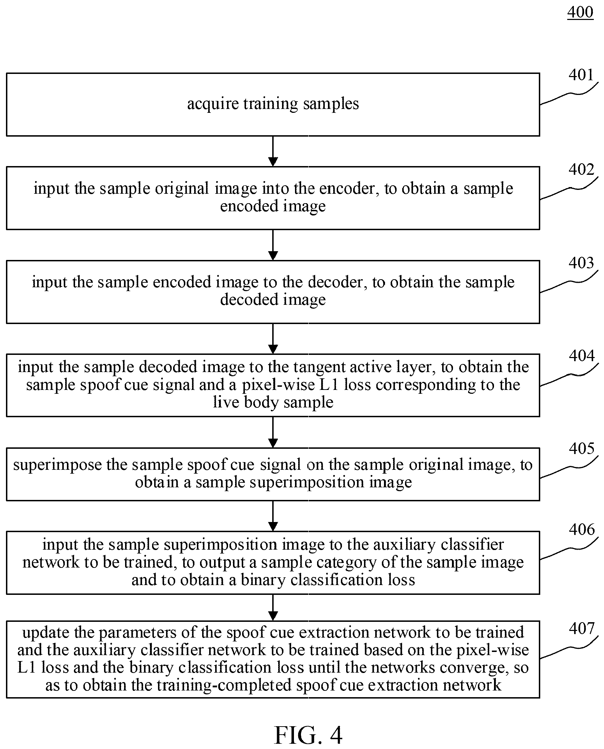

Referring further to FIG. 4, there is shown a flow 400 of a method for training an spoof cue extraction network according to another embodiment of the present disclosure. The spoof cue extraction network in this embodiment may be an encoder-decoder (encoder-decoder) structure. The method for training the spoof cue extraction network may comprise the following steps:

### Step 401: acquiring training samples.

In an embodiment, the execution body(for example, the server 103 shown in FIG. 1) of the method for training the spoof cue extraction network may acquire a large number of training samples. Each training sample may include a sample original image and a corresponding sample category tag. The sample category tag may be used to label that the sample original image belongs to a live body sample or a spoof sample For example, if the sample original image is an image obtained by photographing a live body, the value of the corresponding sample category label may be 1, and the training sample composed of the sample original image and the corresponding sample category label belongs to the live body sample. If the sample original image is an image obtained by photographing a non-live body, the value of the corresponding sample category label may be 0, and a training sample composed of the sample original image and the corresponding sample category label belongs to a spoof sample.

Step 402, inputting the sample original image into the encoder, to obtain a sample encoded image.

In an embodiment, the execution body described above may input the sample original image into the encoder to obtain the sample encoded image. In general, the ResNet18 may be used as the encoder of the spoof cue extraction network. The encoder may include a plurality of encoding residual sub-networks. By passing the sample original image successively through the serially connected plurality of encoding residual sub-networks, a plurality of sample down-sampled encoded images output by the plurality of coding residual sub-networks can be obtained. The sample down-sampled encoded image output from the last encoding residual sub-network may be the sample encoded image. For example, the encoder may include five encoding residual sub-networks, each of which may perform one down-sampling on the sample original image, and for a total of five times of down-sampling on the sample original image.

Step 403, inputting the sample encoded image to the decoder, to obtain the sample decoded image.

In an embodiment, the execution body described above may input the sample encoded image into the decoder and output the sample decoded image. Generally, the decoder may include a plurality of decoding residual sub-networks. The sample decoded image may be obtained by passing the sample original image successively through the serially connected plurality of decoding residual sub-networks. The output of the last decoding residual sub-network may be the sample decoded image. For example, the decoder may include four decoding residual sub-networks, each of which may perform one up-sampling on the sample encoded image, for a total of four times of up-sampling on the sample encoded image.

In some alternative implementations of the present embodiment, for a current decoding residual network in a plurality of decoding residual sub-networks, the execution body may: up-sample an input of the current decoding residual sub-network by using the nearest neighbor interpolation, to obtain a sample up-sampled decoded image; convolve (e.g., 2×2 convolving) the sample up-sampled decoded image to obtain a sample convolved decoded image; concatenate the sample convolved decoded image with an output of an encoding residual sub-network symmetrical to the current decoding residual sub-network, to obtain a sample concatenated decoded image; and input the sample concatenated decoded image into an encoding residual sub-network in the current decoding residual sub-network, to obtain an output of the current decoding residual sub-network.

Step 404: inputting the sample decoded image to the tangent active layer, to obtain the sample spoof cue signal, and a pixel-wise L1 loss corresponding to the live body sample.

In the present embodiment, the execution body described above may input the sample decoded image to a tangent (tanh) active layer to obtain a sample spoof cue signal. In addition, the pixel-wise L1 loss corresponding to the live body sample may also be obtained. The spoof cue signal of the live body sample is defined as an all-zero graph, and the pixel-wise L1 loss is introduced to supervise the live body samples without supervising the output result of spoof samples.

Step 405, superimposing the sample spoof cue signal on the sample original image, to obtain a sample superimposition image.

In an embodiment, the execution body described above may superimpose the sample spoof cue signal on the sample original image to obtain the sample superimposition image.

Step 406, inputting the sample superimposition image to the auxiliary classifier network to be trained, to obtain a sample category of the sample image, and obtaining a binary classification loss.

In an embodiment, the execution body described above may input the sample superimposition image to the auxiliary classifier network to be trained, to obtain the sample category of the sample image. In addition, a binary classification loss may also be obtained. The network convergence is supervised by introducing a binary classification loss function.

Step 407, updating parameters of the spoof cue extraction network to be trained and the auxiliary classifier network to be trained based on the pixel-wise L1 loss and the binary classification loss until the networks converge, so as to obtain the training-completed spoof cue extraction network.

In an embodiment, the execution body may update the parameters of the spoof cue extraction network to be trained and the auxiliary classifier network to be trained based on the pixel-wise L1 loss and the binary classification loss until the networks converge, so as to obtain the training-completed spoof cue extraction network.

According to the method of training the spoof cue extraction network provided in embodiments of the present application, an spoof cue signal is extracted by using an encoder-decoder structure, and a multi-level metric learning method at a decoder stage is introduced for enlarging the inter-class feature distance between live body samples and spoof samples and shortening the intra-class feature distance between live body samples. The spoof cue signal of the live body sample is defined as an all-zero graph, and pixel-wise L1 loss is introduced for supervising the live body samples without supervising the output result of the spoof samples. By superimposing the sample spoof cue signal to the sample original image, the spoof cue signal is further amplified by using an auxiliary classifier network, thereby improving network generalization. A new spoof cue signal modeling method is designed, which extracts and amplifies the spoof cue signal through the encoder-decoder structure combined with multi-level metric learning, pixel-wise L1 loss supervision and auxiliary classifier network, and finally performs live body detection based on the strength of the spoof cue signal, which not only accelerates the convergence speed of network training, improves the generalization of spoof detection algorithm, but also improves the defense effect of spoof detection algorithm against unknown spoof samples and attack modes.

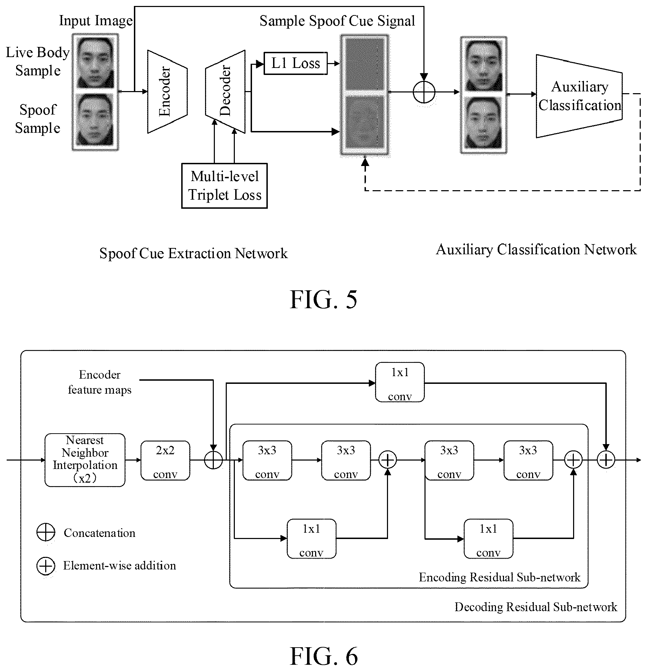

Referring further to FIG. 5, a technical architecture diagram of a method for training an spoof cue extraction network is shown. As shown in FIG. 5, the technical architecture of the method for training a spoof cue extraction network may include an spoof cue extraction network and an auxiliary classifier network. The spoof cue extraction network may be an encoder-decoder structure. The training samples may include live body samples and spoof samples. The sample original image in the training samples may be input to the encoder for processing, and the processed sample original image may be input into the decoder. Multi-level triplet loss is introduced into the decoder, to acquire the sample spoof cue signal and L1 loss corresponding to live body samples. A sample spoof cue signal is superimposed on a sample original image and then input to an auxiliary classifier network for auxiliary classification, to obtain a sample category of the sample original image and a binary classification loss. Finally, the parameters of the spoof cue extraction network and the auxiliary classifier network are updated based on the L1 loss and the binary classification loss until the network converges, so that the training of the spoof cue extraction network may be completed.

Referring further to FIG. 6, a structural diagram of a decoding residual sub-network is shown. As shown in FIG. 6, the input of the current decoding residual sub-network is up-sampled by using the nearest neighbor interpolation, to obtain a sample up-sampled decoded image; then the 2x2 convolution is performed once on the obtained sample up-sampled decoded image, to obtain a sample convolved decoded image; the sample convolved decoded image is concatenated with the output of the encoding residual sub-network which is symmetrical to the current decoding residual sub-network, to obtain a sample concatenated decoded image; and after the concatenation, inputting the sample concatenated decoded image into an encoding residual sub-network in the current decoding residual sub-network, to obtain an output of the current decoding residual sub-network.

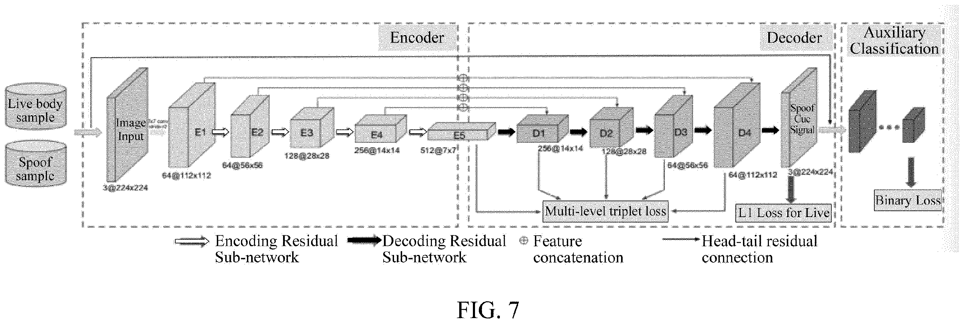

Referring further to FIG. 7, the structural diagram of an spoof cue extraction network and an auxiliary classifier network is illustrated. As shown in FIG. 7, the spoof cue extraction network may be an encoder-decoder structure. The encoder may include five encoding residual sub-networks and the decoder may include four decoding residual sub-networks. The training samples may include live body samples and spoof samples. The sample original images in the training samples may be input to an encoder and successively down-sampled through the serially-connected five encoding residual sub-networks, to obtain a plurality of sample down-sampled encoded images. After the down-sampling is completed, and the sample down-sampled encoded images are input to the decoder, a multi-level triplet loss is introduced into the decoder, and the sample encoded images are successively up-sampled by the serially connected four decoding residual sub-networks, to obtain a sample spoof cue signal and a live body L1 loss. A sample spoof cue signal is superimposed on the sample original image and then input to an auxiliary classifier network for auxiliary classification, to obtain a sample category and a binary classification loss of the sample original image. The parameters of the feature extraction network and the auxiliary classifier network are updated based on the live body L1 loss and the binary classification loss until the network converges, so that the training of the spoof cue extraction network can be completed.

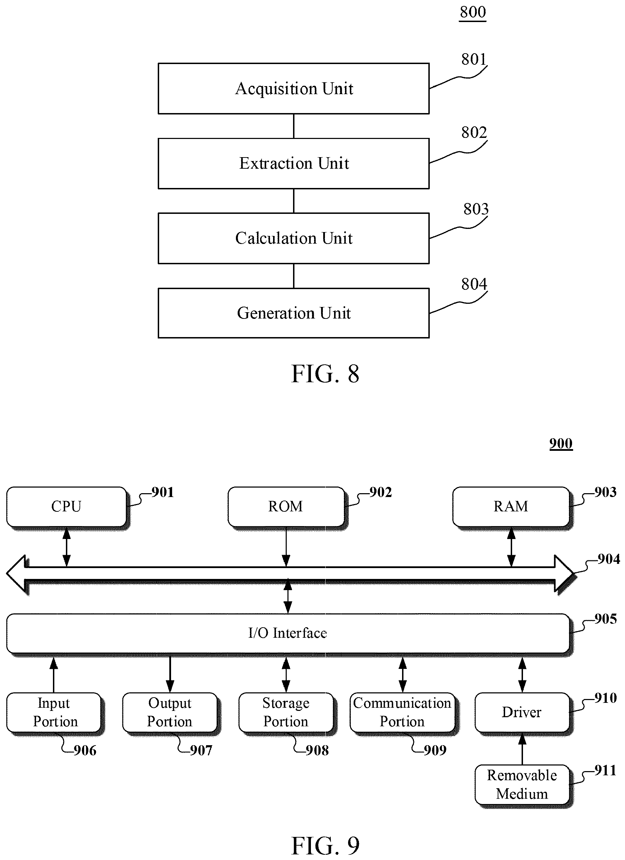

With further reference to FIG. 8, as an implementation of the method shown in above figures, some embodiments of the present disclosure provides an apparatus for spoof detection, which corresponds to the method embodiments shown in FIG. 2. The apparatus may be particularly applicable to various electronic devices.

As shown in FIG. 8, the apparatus 800 for detecting living bodies in the present embodiment may include an acquisition unit 801, an extraction unit 802, a calculation unit 803, and a generation unit 804. The acquisition unit 801 is configured to acquire an original image; the extraction unit 802 configured to input the original image into a training-completed spoof cue extraction network, to obtain a spoof cue signal of the original image; the calculation unit 803 configured to calculate an element-wise mean value of the spoof cue signal; the generation unit 804 is configured to generate a spoof detection result of the original image based on the element-wise mean value.

In an embodiment, in the apparatus 800 for spoof detection: the processing detail of the acquisition unit 801, the extraction unit 802, the calculation unit 803, and the generation unit 804 and the technical effects thereof may be referred to the related description of step 201-204 in the corresponding method embodiments in FIG. 2, and details are not described herein again.

In some alternative implementations of the present embodiment, the training-completed spoof cue extraction network is obtained by acquiring training samples, wherein a training sample comprises a sample original image and a sample category tag for labeling that the sample original image belongs to a live body sample or a spoof sample; and training the spoof cue extraction network to be trained and an auxiliary classifier network to be trained simultaneously by using the training samples, to obtain the training-completed spoof cue extraction network.

In some alternative implementations of the present embodiment, the training the spoof cue extraction network to be trained and the auxiliary classifier network to be trained simultaneously by using the training samples, to obtain the training-completed spoof cue extraction network, includes: training the spoof cue extraction network to be trained by using the sample original image, to obtain a sample spoof cue signal of the sample original image and a pixel-wise L1 loss corresponding to the live body sample; training the auxiliary classifier network to be trained with the sample spoof cue signal, to obtain a sample category of the sample original image and a binary classification loss; updating parameters of the spoof cue extraction network to be trained and the auxiliary classifier network to be trained based on the pixel-wise L1 loss and the binary classification loss until the networks converge, so as to obtain the training-completed spoof cue extraction network.

In some alternative implementations of the present embodiment, the training the spoof cue extraction network to be trained by using the sample original image, to obtain the sample spoof cue signal of the sample original image, includes: inputting the sample original image into the spoof cue extraction network to be trained, to obtain the sample spoof cue signal; and the training the auxiliary classifier network to be trained by using the sample spoof cue signal, to obtain the sample category of the sample original image, includes: superimposing the sample spoof cue signal on the sample original image, to obtain a sample superimposition image; and inputting the sample superimposition image to the auxiliary classifier network to be trained, to obtain the sample category of the sample original image.

In some alternative implementations of the present embodiment, the spoof cue extraction network comprises an encoder-decoder structure; and the inputting the sample original image into the spoof cue extraction network to be trained, to obtain the sample spoof cue signal, includes: inputting the sample original image into the encoder, to obtain a sample encoded image; inputting the sample encoded image into the decoder, and to obtain a sample decoded image; inputting the sample decoded image into a tangent activation layer, to obtain the sample spoof cue signal.

In some alternative implementations of the present embodiment, the encoder comprises a plurality of encoding residual sub-networks. the inputting the sample original image to the encoder, to obtain the sample encoded image, includes: down-sampling the sample original image successively by using the serially connected plurality of encoding residual sub-networks, to obtain a plurality of sample down-sampled encoded images output by the plurality of encoding residual sub-networks, where the sample down-sampled encoded image output by the last encoding residual sub-network is the sample encoded image.

In some alternative implementations of the present embodiment, the decoder comprises a plurality of decoding residual sub-networks, the inputting the sample encoded image to the decoder, to obtain the sample decoded image, includes: decoding the sample encoded image successively by using the serially connected plurality of decoding residual sub-networks, to obtain the sample decoded image.

In some alternative implementations of the present embodiment, the decoding the sample encoded image successively by using the serially connected plurality of decoding residual sub-networks, includes: for a current decoding residual sub-network in the plurality of decoding residual sub-networks, up-sampling an input of the current decoding residual sub-network by using nearest neighbor interpolation, to obtain a sample up-sampled decoded image; convolving the sample up-sampled decoded image, to obtain a sample convolved decoded image; concatenating the sample convolved decoded image with an output of an encoding residual sub-network symmetrical to the current decoding residual sub-network, to obtain a sample concatenated decoded image; inputting the sample concatenated decoded image into an encoding residual sub-network in the current decoding residual sub-network, to obtain an output of the current decoding residual sub-network.

Referring to Fig. 9, a schematic structural diagram of a computer system 900 of an electronic device (e.g., the server 103 shown in FIG. 1) adapted to implement embodiments of the present disclosure is shown. The electronic device shown in FIG. 9 is just an example, and should not bring any limit to the function and usage range of embodiments of the prenset disclosure. As shown in Fig. 9, the computer system 900 includes a central processing unit (CPU) 901, which may execute various appropriate actions and processes in accordance with a program stored in a read-only memory (ROM) 902 or a program loaded into a random access memory (RAM) 903 from a storage portion 908. The RAM 903 also stores various programs and data required by operations of the system 900. The CPU 901, the ROM 902 and the RAM 903 are connected to each other through a bus 904. An input/output (I/O) interface 905 is also connected to the bus 904.

The following components are connected to the I/O interface 905: an input portion 906 including a keyboard, a mouse etc.; an output portion 907 comprising a cathode ray tube (CRT), a liquid crystal display device (LCD), a speaker etc.; a storage portion 908 including a hard disk and the like; and a communication portion 909 comprising a network interface card, such as a LAN card and a modem. The communication portion 909 performs communication processes via a network, such as the Internet. A driver 910 is also connected to the I/O interface 905 as required. A removable medium 911, such as a magnetic disk, an optical disk, a magneto-optical disk, and a semiconductor memory, may be installed on the driver 910, to facilitate the retrieval of a computer program from the removable medium 911, and the installation thereof on the storage portion 908 as needed.

In particular, according to embodiments of the present disclosure, the process described above with reference to the flow chart may be implemented in a computer software program. For example, an embodiment of the present disclosure includes a computer program product, which comprises a computer program that is hosted in a machine-readable medium. The computer program comprises program codes for executing the method as illustrated in the flow chart. In such an embodiment, the computer program may be downloaded and installed from a network via the communication portion 909, or may be installed from the removalbe medium 911. The computer program, when executed by the central processing unit (CPU) 901, implements the above mentioned functionalities as defined by the methods of the present disclosure.

It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In some embodiments of the present disclosure, the computer readable storage medium may be any tangible medium containing or storing programs which can be used by a command execution system, apparatus or element or incorporated thereto. In some embodiments of the present disclosure, the computer readable signal medium may include data signal in the base band or propagating as parts of a carrier, in which computer readable program codes are carried. The propagating signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

A computer program code for executing operations in some embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider) .The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The units or modules involved in embodiments of the present disclosure may be implemented by means of software or hardware. The described units or modules may also be provided in a processor, for example, described as: a processor, comprising an acquisition unit, an extraction unit, a calculation unit and a generation unit, where the names of these units or modules do not in some cases constitute a limitation to such units or modules themselves. For example, the acquisition unit may also be described as "a unit for acquiring an original image."

In another aspect, some embodimetns of the present disclosure further provide a computer-readable storage medium. The computer-readable storage medium may be the computer storage medium included in the apparatus in the above described embodiments, or a stand-alone computer-readable storage medium not assembled into the apparatus. The computer-readable storage medium stores one or more programs . The one or more programs, when executed by a device, cause the device to: acquire an original image; input the original image into a training-completed spoof cue extraction network, to obtain a spoof cue signal of the original image; calculate an element-wise mean value of the spoof cue signal; and generate a spoof detection result of the original image based on the element-wise mean value.

The above description only provides an explanation of preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. A method for spoof detection, comprising:
acquiring (201) an original image;
inputting (202) the original image into a training-completed spoof cue extraction network, to obtain a spoof cue signal of the original image;
calculating (203) an element-wise mean value of the spoof cue signal; and
generating (204) a spoof detection result of the original image based on the element-wise mean value.

2. The method according to claim 1, wherein the training-completed spoof cue extraction network is obtained by:
acquiring (301) training samples, wherein a training sample comprises a sample original image and a sample category tag for labeling that the sample original image belongs to a live body sample or a spoof sample; and
training (302) the spoof cue extraction network to be trained and an auxiliary classifier network to be trained simultaneously by using the training samples, to obtain the training-completed spoof cue extraction network.

3. The method according to claim 2, wherein the training (302) the spoof cue extraction network to be trained and the auxiliary classifier network to be trained simultaneously by using the training samples, to obtain the training-completed spoof cue extraction network, comprises:
training the spoof cue extraction network to be trained by using the sample original image, to obtain a sample spoof cue signal of the sample original image and a pixel-wise L1 loss corresponding to the live body sample;
training the auxiliary classifier network to be trained with the sample spoof cue signal, to obtain a sample category of the sample original image and a binary classification loss; and
updating (407) parameters of the spoof cue extraction network to be trained and the auxiliary classifier network to be trained based on the pixel-wise L1 loss and the binary classification loss until the networks converge, so as to obtain the training-completed spoof cue extraction network.

4. The method according to claim 3, wherein
the training the spoof cue extraction network to be trained by using the sample original image, to obtain the sample spoof cue signal of the sample original image comprises:
inputting the sample original image into the spoof cue extraction network to be trained, to obtain the sample spoof cue signal; and
the training the auxiliary classifier network to be trained by using the sample spoof cue signal, to obtain the sample category of the sample original image comprises:
superimposing (405) the sample spoof cue signal on the sample original image, to obtain a sample superimposition image;
inputting (406) the sample superimposition image to the auxiliary classifier network to be trained, to obtain the sample category of the sample original image.

5. The method according to any one of claims 2-4, wherein the spoof cue extraction network comprises an encoder-decoder structure; and
the inputting (202) the sample original image into the spoof cue extraction network to be trained, to obtain the sample spoof cue signal comprises:
inputting (402) the sample original image into the encoder, to obtain a sample encoded image;
inputting (403) the sample encoded image into the decoder, and to obtain a sample decoded image;
inputting (404) the sample decoded image into a tangent activation layer, to obtain the sample spoof cue signal.

6. The method according to claim 5, wherein the encoder comprises a plurality of encoding residual sub-networks; and
the inputting (402) the sample original image to the encoder, to obtain the sample encoded image comprises:
down-sampling the sample original image successively by using the serially connected plurality of encoding residual sub-networks, to obtain a plurality of sample down-sampled encoded images output by the plurality of encoding residual sub-networks, wherein the sample down-sampled encoded image output by the last encoding residual sub-network is the sample encoded image.

7. The method according to any one of claims 5-6, wherein the decoder comprises a plurality of decoding residual sub-networks; and
the inputting (403) the sample encoded image to the decoder, to obtain the sample decoded image includes:
decoding the sample encoded image successively by using the serially connected plurality of decoding residual sub-networks, to obtain the sample decoded image.

8. The method according to claim 7, wherein the decoding the sample encoded image successively by using the serially connected plurality of decoding residual sub-networks comprises:
for a current decoding residual sub-network in the plurality of decoding residual sub-networks, up-sampling an input of the current decoding residual sub-network by using nearest neighbor interpolation, to obtain a sample up-sampled decoded image;
convolving the sample up-sampled decoded image, to obtain a sample convolved decoded image;
concatenating the sample convolved decoded image with an output of an encoding residual sub-network symmetrical to the current decoding residual sub-network, to obtain a sample concatenated decoded image; and
inputting the sample concatenated decoded image into an encoding residual sub-network in the current decoding residual sub-network, to obtain an output of the current decoding residual sub-network.

9. An apparatus for spoof detection, comprising:
an acquisition unit (801), configured to acquire (201) an original image;
an extraction unit (802), configured to input (202) the original image into a training-completed spoof cue extraction network, to obtain a spoof cue signal of the original image;
a calculation unit (803), configured to calculate (203) an element-wise mean value of the spoof cue signal; and
a generation unit (804), configured to generate (204) a spoof detection result of the original image based on the element-wise mean value.

10. The apparatus according to claim 9, wherein the training-completed spoof cue extraction network is obtained by:
acquiring (301) training samples, wherein a training sample comprises a sample original image and a sample category tag for labeling that the sample original image belongs to a live body sample or a spoof sample; and
training (302) the spoof cue extraction network to be trained and an auxiliary classifier network to be trained simultaneously by using the training samples, to obtain the training-completed spoof cue extraction network.

11. The apparatus according to claim 10, wherein the training the spoof cue extraction network to be trained and the auxiliary classifier network to be trained simultaneously by using the training samples, to obtain the training-completed spoof cue extraction network, comprises:
training the spoof cue extraction network to be trained by using the sample original image, to obtain a sample spoof cue signal of the sample original image and a pixel-wise L1 loss corresponding to the live body sample;
training the auxiliary classifier network to be trained with the sample spoof cue signal, to obtain a sample category of the sample original image and a binary classification loss;
updating (407) parameters of the spoof cue extraction network to be trained and the auxiliary classifier network to be trained based on the pixel-wise L1 loss and the binary classification loss until the networks converge, so as to obtain the training-completed spoof cue extraction network.

12. The apparatus according to claim 11, wherein
the training the spoof cue extraction network to be trained by using the sample original image, to obtain the sample spoof cue signal of the sample original image, comprises:
inputting the sample original image into the spoof cue extraction network to be trained, to obtain the sample spoof cue signal; and
the training the auxiliary classifier network to be trained by using the sample spoof cue signal, to obtain the sample category of the sample original image, comprises:
superimposing (405) the sample spoof cue signal on the sample original image, to obtain a sample superimposition image; and
inputting (406) the sample superimposition image to the auxiliary classifier network to be trained, to obtain the sample category of the sample original image.

13. An electronic device, comprising:
one or more processors;
storage means, storing one or more programs thereon, the one or more programs, when executed by the one or more processors, cause the one or more processors to perform the method according to any one of claims 1 to 8.

14. A computer readable medium, storing a computer program, wherein the computer program, when executed by a processor, causes the processor to perform the method according to any one of claims 1 to 8.

15. A computer program product comprising instructions which, when the program is executed by a computer, cause the computer to carry out the method of claims 1 to 8.
